# EUROPEAN PATENT SPECIFICATION

(11) **EP 1 642 827 B1**
(45) Date of publication and mention of the grant of the patent: **24.08.2011**
(21) Application number: 05020683.8
(22) Date of filing: 22.09.2005
(51) Int. Cl.: B64D 11/00, B64D 9/00, B64C 1/22, B66B 9/00, B66F 7/00

(54) **Aircraft with a lift system**
Luftfahrzeug mit einem Aufzug
Aéronef avec un ascenseur

(30) Priority: 23.09.2004 DE 102004046146; 29.11.2004 US 631335 P
(43) Date of publication of application: 05.04.2006
(73) Proprietor: Airbus Operations GmbH, 21129 Hamburg (DE)
(72) Inventor: Hubenthal, W., 22419 Hamburg (DE); Damitz, H., 65594 Runkel (DE); Windischbauer, Florian, 88131 Lindau (DE); Rössner, Bernd, 21224 Rosengarten (DE)
(74) Representative: Dilg, Andreas

(56) References cited:
- WO-A-00/30422
- DE-A1- 10 204 892
- DE-A1- 19 956 403
- DE-C1- 10 158 232
- US-A- 4 653 707
- US-A1- 2003 057 031

## Description

The invention relates to an aircraft with a lift system, wherein the lift services several decks in the aircraft, and can travel down to the landing strip through an opening on the fuselage underside.

The steady rise in air traffic is being accompanied by the increased use of double-decker aircraft. The use of onboard lifts to transport cargo between the decks in such airplanes is known from WO 00/30422, for example. In addition, it is desirable in such aircraft that the lift also be able to approach another lower level and service the landing strip level. This document here provides for a scissor lift to lower cargo comprised of boxes, which directly handles the payload. Such a system does not enable passenger transport. Another mentioned solution involves a telescoping device, wherein an additional independently driven carriage travels out and down, lowering or raising the transport container with cargo. The additional independently driven carriage greatly increases the complexity, which adversely impacts maintenance and the weight of the lift system.

Given a lift capable of navigating at ground level, it is desirable to convey both cargo and passengers from the ground directly to the respective cabin deck, for which the conventional cargo area loading equipment are hardly suited.

US 4,653,707 proposes an onboard lift that services various decks in the aircraft along with the landing strip level. The lift cabin exits through an opening in the fuselage and travels downward, transporting passengers or goods. The structure consists of a guide shaft secured in the aircraft, which envelops the actual cabin on all sides. In light of the guide function, the shaft must be able to traverse at least the distance to the ground. Since the shaft completely envelops the cabin as a force-conveying structural element, it must also be expected to be heavy. In addition, the drive consists of ropes and pulleys, making it complicated and high-maintenance.

Another example of an onboard lift is disclosed in DE 19956403 A1, which is regarded as the closest prior art, showing all the features of the preamble of the independent claim 1.

An object of the invention is to configure an onboard lift in an aircraft that enables lowering to ground level, and in particular has a weight-minimizing, low-maintenance design independent of fuselage deformation.

This object is achieved by the features specified in claim 1.

With respect to the possibility of a ground-navigable lift for cargo and passenger transport, it is particularly advantageous that the solution according to the invention provide for a compact structure and low level of complexity, wherein telescoping systems and cable winches are avoided in an advantageous embodiment. The special way in which the lift cabin is guided yields a lightweight design with sufficient stability. Therefore, the lift system according to the invention is simpler and lighter than previously known lift systems.

Further developments and advantageous embodiments of the invention are described in claims 2 to 10. Details and additional details may be gleaned from the following description of an exemplary embodiment of the invention.

Shown on:
- Fig. 1: is a longitudinal section through an aircraft fuselage with a lift system;
- Fig. 2: is a cross section through the aircraft fuselage with a lift system;
- Fig. 3: is a section in the vertical plane of the lower lift area;
- Fig. 4: is a section in the horizontal plane of the lower lift area.

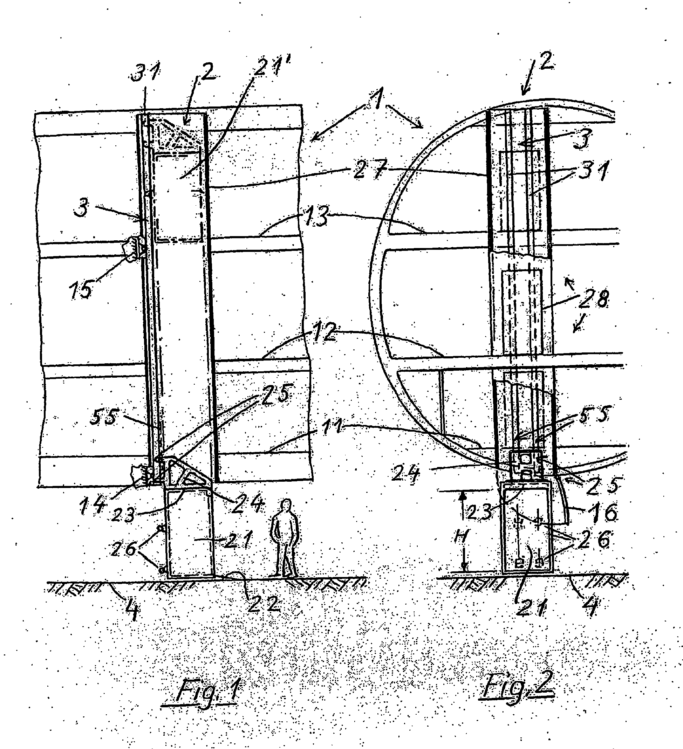

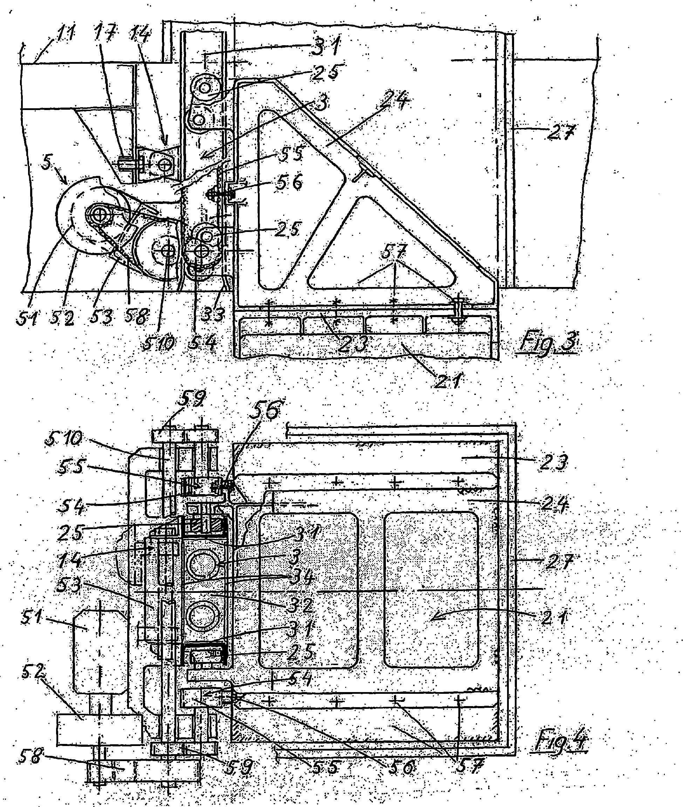

Fig. 1 shows a longitudinal section through an aircraft fuselage 1 with a lift system 2. The fuselage 1 has three levels, namely a cargo area floor 11, a main deck 12 and an upper deck 13. As shown, a lift cabin 21 can be lowered to the landing strip 4, also allowing wheelchair-bound passengers to use it by way of a small ramp 22. The lift cabin 21 travels into a guide structure 3 by way of a bogie truck 24 secured to the cabin roof 23. Due to assembly and production considerations, the bogie truck 24 is detachably secured with connecting elements 57 (see Fig. 3ff). When the lift cabin 21 travels into the lowest position, guide elements 25 of the bogie truck 24 are situated completely inside profile rails 31 in the fuselage 1, while the cabin 21 is completely exposed. This arrangement of the guide structure 3 and lift cabin 21 with mounted bogie truck 24 according to the invention makes it possible to design the cabin 21 with only the height required for passengers, wherein the lightweight-design bogie truck 24 is actually guided via the guiding elements 25. The drawing roughly depicts the relative dimensional ratios of a large capacity double-level aircraft with dimension H, which dimension H measures approx. 2 m. The height of the bogie truck 24 depends on the space between the upper and lower guiding elements 25, which is dimensioned in such a way as to leave enough of a safety gap to the fuselage shell 1 in the top lift position 21'. The distance between the guiding elements 25 here remains large enough to make the opposite forces generated by the tilting moment of the cabin 21 and acting on the elements 25 non-critical when the cabin 21 travels out of the fuselage 1. Since transverse forces are also encountered during flight as opposed to ground operations, additional guiding elements 26 are provided when needed, which leave the guiding structure 3 during egress from the fuselage 1. Upon reentry into the fuselage 1, the elements 26 hence provide additional guidance, so that the cabin 21 rests on a wider base as it traverses the interior of the fuselage 1, and any impact involving the lift shaft 27 is precluded, primarily during flight maneuvers. The guiding structure 3 consists of two profile rails 31, in which the guiding elements 25, 26 run and/or slide. The rails 31 are rigidly interconnected, and as the guiding structure 3 constitute the basis underlying the movement of the lift in the cabin. The structure 3 can advantageously be designed as a torsionally resistant box (see Fig. 4). To ensure that lift operation is unaffected by fuselage deformation, the guiding structure 3 is secured by a fixed bearing 14 and movable bearing 15 to the fuselage 1 in a statically defined manner. The fixed bearing 14 absorbs forces in the x, y, z direction, while the movable bearing 15 only counters forces in the xy plane. Therefore, the lift shaft 27 consists only of cladding, and can have a relatively light structure due to the absence of forces. The lift is driven via low-noise toothed belts 55, which are coupled to the bogie truck 24 (see Fig. 3 and 4 for a more detailed description).

Fig. 2 shows the cross section through the aircraft fuselage 1 and the lift system 2 corresponding to Fig. 1. On the fuselage underside a flap 16 is provided for ensuring lift egress and pressure tightness when closed. The lift shaft 27 is here incorporated out of center directly next to an aisle, which offers advantages in terms of lift access and seating arrangement; however, central incorporation is also possible. The shaft 27 has doors 28 on each deck; however, the door in the cargo area has a smaller height.

Fig. 3 shows a diagrammatic section of a side view of the lower lift area, with the following primary components: profile rails 31, bogie truck 24, lift cabin 21, fixed bearings 14 and drive 5. The drive motor 51 with coupling-braking unit 52 coupled thereto sits on a bearing block 53, which is directly connected with the guiding structure 3. That is, the drive 5 forms a single unit with the guiding structure 3, thereby remaining unaffected by fuselage cell deformation. Two toothed belts 55 are driven by drive elements not described in any greater detail on Fig. 3 and by two driving wheels 54 each secured laterally to the structure 3. These have deflection pulleys above in the fuselage, making it possible to adjust the belt tension. The two toothed belts 55 are connected by coupling elements 56 with the bogie truck 24. Since the guiding elements 25 absorb the transverse forces or the counter forces from the cabin moment, only longitudinal forces, in a z-direction, act on the toothed belts 55 at the coupling elements 56. The guiding elements 25 are depicted as roller pairs in the drawing; however, other solutions are possible, e.g., sliding blocks made of plastic. The bogie truck 24 is flanged to the cabin roof 28 by screws 57 or the like, thereby easily enabling a separation for maintenance-related disassembly. The bogie truck 24 can then also be detached via the coupling elements 56 from the toothed belts 55, and the latter can be changed out as required. The toothed belts 55 are easy to assemble in that they lie outside the guiding structure 3. The fixed bearing 14 can also be formed as gimbals, if needed. This is denoted on the drawing by an additional rotational axis 17. The forces acting on the guiding structure 3 are in this way partially absorbed by the spars of the aircraft structure, e.g., the cargo area floor 11. The remaining forces are released on the movable bearing 15 located further up. To better thread the additional guiding elements 26 as the cabin 21 ascends, the profile rails 31 are somewhat conical at the lower end, denoted here as an inclined profile catch 33.

Drive solutions other than the one described for driving the toothed belts 55 are of course also possible. For example, the individual drive elements could be flanged directly to the guiding structure 3 without a bearing block 53, wherein the connecting shaft 510 could under certain conditions come to lie inside the profile rails 31. The guiding elements 25 lying below (track rollers in the drawing) would then have to edge higher on the bogie truck 24, however.

Fig. 4 shows a section of Fig. 3 in a horizontal projection. The lift shaft 27 envelops the lift cabin 21 without any contact. Since all forces emanating from the lift movement are absorbed by the guiding structure 3 and/or the profile rails 31, the lift shaft 27 can be merely designed as a light cladding. The profile rails 31 together with the webs 32 and cover plates 34 form the integral guiding structure 3. The guiding elements 25 here depicted as track rollers move in the profile rails 31. These are hinged to the bogie truck 24, which preferably comprises and/or consists of light metal or plastic, and only negligibly increases the weight of the entire cabin unit. The toothed belts 55 are here arranged to the side of the guiding structure 3, which facilitates assembly. The connection to the bogie truck 24 is established via coupling elements 56. The drive motor 51 acts by way of a coupling-braking unit 52, e.g., via driving belt 58, on a gear transmission 59, which moves a driving wheel 54. The gear transmission 59 ensures that the opposing toothed belt 55 is driven by the connecting shaft 510. All drive units and shafts are secured to the bearing block 53, which is in turn screwed to the guiding structure 3. This ensures that lifting operations can take place independently of the elastic deformations of the fuselage 1 encountered in flight.

The, here shown, drive train from the motor 51 to the gear transmission 59 can be realized as self-inhibiting gearing or some other configuration, as requirements warrant. It is also easily possible to arrange the toothed belts 55 in another way, e.g., have one half of the belt run inside the guiding structure 3, while the other half is connected outside with the bogie truck 24 via the coupling elements. This solution yields a more compact design, but incorporating and dismantling is more complicated during the assembly process, which might be tolerated given long replacement intervals if space considerations were to make such a solution referable.

### Reference List

- 1: Aircraft fuselage
11 Cargo area floor
12 Main deck
13 Upper deck
14 Fixed bearing
15 Movable bearing
16 Fuselage flap
17 Rotational axis
- 2: Lift
21 Cabin, 21' - top position
22 Ramp
23 Cabin roof
24 Bogie truck
25 Guiding elements
26 Additional guiding elements
27 Lift shaft
28 Shaft door
- 3: Guiding structure
31 Profile rails
32 Connecting webs
33 Inclined profile set
34 Cover plates
- 4: Landing strip
- 5: Driving block
51 Drive motor
52 Coupling-braking unit
53 Bearing block
54 Drive wheel
55 Toothed belt
56 Coupling element
57 Connecting elements
58 Driving belt
59 Gear transmission
510 Connecting shaft
- H: Dimensional measure = about 2 m

## Claims

1. An aircraft with a lift system for guiding a lift cabin, wherein the lift cabin services several decks in the aircraft, is traversable on a guiding structure supported inside the aircraft fuselage, and can travel down to the landing strip through an opening on the fuselage underside, **characterized in that** the lift cabin (21) is arranged on the guiding structure (3) by a bogie truck (24) arranged above the lift cabin roof (23), and the bogie truck (24) is actively connected with profile rails (31) of the guiding structure (3) via guiding elements (25), and the part of the bogie truck (24) carrying the guiding elements (25) remains in the fuselage (1) in the bottom lift position, while the lift cabin (21) is entirely driven out of the fuselage (1).

2. The aircraft according to claim 1, wherein additional guiding elements (26) are secured to the lift cabin (21) and are introducable into the profile rails (31) from the bottom lift position during upward movement by way of an inclined profile catch (33).

3. The aircraft according to one of claims 1 or 2, wherein the guiding elements (25, 26) are designed as track rollers or sliding bodies.

4. The aircraft according to one of claims 1 to 3, wherein the bogie truck (24) comprises and/or consists of light metal or fiber-reinforced plastic, and is detachably assembled with the cabin roof (23) by connecting elements (57).

5. The aircraft according to one of claims 1 to 4, wherein a lift drive (5) actively connected with the bogie truck (24) is designed as a toothed belt drive (55).

6. The aircraft according to claim 5, wherein the toothed belts (55) actively connected with the bogie truck (24) via coupling elements (56) are situated outside the guiding structure (3).

7. The aircraft according to claim 5, wherein the toothed belts (55) actively connected with the bogie truck (24) are situated partially inside the guiding structure (3) in such a way that one half of the rotating toothed belt (55) runs inside the guiding structure (3), while the other half is connected outside with the bogie truck (24) via the coupling elements (56).

8. The aircraft according to one of claims 1 to 7, wherein the lift cabin (21) is situated inside a lift shaft (27), wherein the lift cabin (21) is guided inside the lift shaft (27) without any contact.

9. The aircraft according to one of claims 1 to 8, wherein the lift shaft (27) is made out of light structural elements.

10. The aircraft according to one of claims 1 to 9, wherein the guiding structure (3) is designed as a distortion-resistant and rigid torsional box using profile rails (31), connecting webs (32) and cover plates (34) as the components.

11. The aircraft according to one of claims 1 to 10, wherein the lift drive (5) comprises a drive motor (51), a coupling-braking unit (52) and transmission means (58, 59, 510) for the drive wheel (54), which powers the toothed belts (55).

12. The aircraft according to one of claims 1 to 11, wherein the lift drive (5) is mounted to the guiding structure (3).

## Patentansprüche

1. Luftfahrzeug mit einer Lifteinrichtung zur Führung einer Liftkabine, wobei die Liftkabine mehrere Decks im Luftfahrzeug bedient, an einer innerhalb des Luftfahrzeugrumpfes gelagerten Führungsstruktur verfahrbar und durch eine Öffnung an der Rumpfunterseite zum Rollfeld hinabführbar ist, **dadurch gekennzeichnet, dass** die Liftkabine (21) an der Führungsstruktur (3) mittels eines oberhalb der Liftkabinendecke (23) angebrachten Laufwagens (24) angeordnet ist und der Laufwagen (24) über Führungselemente (25) in Wirkverbindung mit Profilschienen (31) der Führungsstruktur (3) steht und der die Führungselemente (25) tragende Teil des Laufwagens (24) in der untersten Liftposition im Rumpf (1) verbleibt, während die Liftkabine (21) gänzlich aus dem Rumpf (1) herausgefahren ist.

2. Luftfahrzeug nach Anspruch 1, wobei an der Liftkabine (21) zusätzliche Führungselemente (26) angebracht sind, welche über einen schrägen Profilansatz (33) aus der untersten Liftposition bei der Bewegung nach oben in die Profilschienen (31) einführbar sind.

3. Luftfahrzeug nach einem der Ansprüche 1 oder 2, wobei die Führungselemente (25, 26) als Laufrollen oder Gleitkörper ausgebildet sind.

4. Luftfahrzeug nach einem der Ansprüche 1 bis 3, wobei der Laufwagen (24) Leichtmetall oder faserverstärkten Kunststoff aufweist oder daraus besteht und lösbar mit der Kabinendecke (23) mittels Verbindungselementen (57) montiert ist.

5. Luftfahrzeug nach einem der Ansprüche 1 bis 4, wobei ein mit dem Laufwagen (24) in Wirkverbindung stehender Liftantrieb (5) als Zahnriemenantrieb (55) ausgebildet ist.

6. Luftfahrzeug nach Anspruch 5, wobei die mit dem Laufwagen (24) über Kopplungselemente (56) in Wirkverbindung stehenden Zahnriemen (55) außerhalb der Führungsstruktur angeordnet sind.

7. Luftfahrzeug nach Anspruch 5, wobei die mit dem Laufwagen (24) in Wirkverbindung stehenden Zahnriemen (55) dergestalt teilweise innerhalb der Führungsstruktur (3) angeordnet sind, dass eine Hälfte des umlaufenden Zahnriemens (55) innerhalb der Führungsstruktur (3) verläuft, während die andere Hälfte außen mit dem Laufwagen (24) über die Kopplungselemente (56) verbunden ist.

8. Luftfahrzeug nach einem der Ansprüche 1 bis 7, wobei die Liftkabine (21) sich innerhalb eines Liftschachtes (27) befindet, wobei die Liftkabine (21) innerhalb des Liftschachtes (27) berührungslos geführt wird.

9. Luftfahrzeug nach einem der Ansprüche 1 bis 8, wobei der Liftschacht aus Leichtbauelementen gefertigt ist.

10. Luftfahrzeug nach einem der Ansprüche 1 bis 9, wobei die Führungsstruktur (3) mittels der Bauteile Profilschienen (31), Verbindungsstege (32) und Deckbleche (34) als verwindungs- und biegesteifer Torsionskasten ausgebildet ist.

11. Luftfahrzeug nach einem der Ansprüche 1 bis 10, wobei der Liftantrieb (5) einen Antriebsmotor (51), eine Kupplungs-Bremseinheit (52) sowie Übertragungsmittel (58, 59, 510) für das Antriebsrad (54), welches den Zahnriemen (55) antreibt, aufweist.

12. Luftfahrzeug nach einem der Ansprüche 1 bis 11, wobei der Liftantrieb (5) an die Führungsstruktur (3) montiert ist.

## Revendications

1. Avion muni d'un système d'ascenseur pour guider une cabine d'ascenseur, dans lequel la cabine d'ascenseur dessert plusieurs ponts dans l'avion, peut effectuer une traversée sur une structure de guidage supportée à l'intérieur du fuselage de l'avion, et peut descendre jusqu'à la bande d'atterrissage à travers une ouverture sur l'intrados du fuselage, **caractérisé en ce que** la cabine d'ascenseur (21) est agencée sur la structure de guidage (3) par l'intermédiaire d'un chariot à boggies (24) agencé au-dessus du toit de cabine d'ascenseur (23), et le chariot à boggies (24) est activement relié à des rails profilés (31) de la structure de guidage (3) par des éléments de guidage (25), et la partie du chariot à boggies (24) portant les éléments de guidage (25) reste dans le fuselage (1) dans la position basse de l'ascenseur, alors que la cabine d'ascenseur (21) est entièrement entraînée à l'extérieur du fuselage (1).

2. Avion selon la revendication 1, dans lequel des éléments de guidage supplémentaires (26) sont fixés à la cabine d'ascenseur (21) et peuvent être introduits dans les rails profilés (31) à partir de la position basse de l'ascenseur pendant un mouvement ascendant au moyen d'un cliquet profilé incliné (33).

3. Avion selon l'une des revendications 1 ou 2, dans lequel les éléments de guidage (25, 26) sont conçus sous forme de galets de roulement ou de corps glissants.

4. Avion selon l'une des revendications 1 à 3, dans lequel le chariot à boggies (24) comporte et/ou est constitué d'un métal léger ou d'une matière plastique renforcée par des fibres, et est assemblé avec le toit de cabine (23) de manière amovible, par des éléments de liaison (57).

5. Avion selon l'une des revendications 1 à 4, dans lequel un mécanisme d'entraînement d'ascenseur (5) activement relié au chariot à boggies (24) est conçu sous la forme d'un entraînement par courroies crantées (55).

6. Avion selon la revendication 5, dans lequel les courroies crantées (55) activement reliées au chariot à boggies (24) par des éléments de couplage (56) sont situées à l'extérieur de la structure de guidage (3).

7. Avion selon la revendication 5, dans lequel les courroies crantées (55) activement reliées au chariot à boggies (24) sont situées en partie à l'intérieur de la structure de guidage (3) de manière à ce que la moitié de la courroie crantée en rotation (55) s'étende à l'intérieur de la structure de guidage (3), alors que l'autre moitié est reliée à l'extérieur au chariot à boggies (24) par les éléments de couplage (56).

8. Avion selon l'une des revendications 1 à 7, dans lequel la cabine d'ascenseur (21) est située à l'intérieur d'une gaine d'ascenseur (27), dans lequel la cabine d'ascenseur (21) est guidée à l'intérieur de la gaine d'ascenseur (27) sans aucun contact.

9. Avion selon l'une des revendications 1 à 8, dans lequel la gaine d'ascenseur (27) est constituée d'éléments structurels légers.

10. Avion selon l'une des revendications 1 à 9, dans lequel la structure de guidage (3) est conçue sous la forme d'un caisson de torsion rigide et résistant à la déformation en utilisant des rails profilés (31), des armatures de liaison (32) et des plaques de recouvrement (34) comme composants.

11. Avion selon l'une des revendications 1 à 10, dans lequel le mécanisme d'entraînement d'ascenseur (5) comporte un moteur d'entraînement (51), une unité d'accouplement-freinage (52) et des moyens de transmission (58, 59, 510) pour la roue d'entraînement (54), qui actionnent les courroies crantées (55).

12. Avion selon l'une des revendications 1 à 11, dans lequel le mécanisme d'entraînement d'ascenseur (5) est monté sur la structure de guidage (3).
